Europäisches Patentamt

**European Patent Office**

Office européen des brevets

(11) Numéro de publication: **0 307 384 B1**

(12) **FASCICULE DE BREVET EUROPEEN**

(45) Date de publication du fascicule du brevet:
14.11.90

(51) Int. Cl.⁵: **B23K 26/06**

(21) Numéro de dépôt: **88870145.5**

(22) Date de dépôt: **02.09.88**

(54) **Dispositif pour moduler un faisceau laser.**

(30) Priorité: **11.09.87 BE 8701027**

(43) Date de publication de la demande:
**15.03.89 Bulletin 89/11**

(45) Mention de la délivrance du brevet:
**14.11.90 Bulletin 90/46**

(84) Etats contractants désignés:
**AT BE DE ES FR GB IT LU SE**

(56) Documents cités:
**EP-A- 0 119 182**
**DE-A- 3 226 811**
**US-A- 3 942 878**
**US-A- 4 519 680**

(73) Titulaire: **CENTRE DE RECHERCHES METALLURGIQUES CENTRUM VOOR RESEARCH IN DE METALLURGIE Association sans but lucratif, Vereniging zonder winstoogmerk Rue Montoyer, 47, B-1040 Bruxelles(BE)**

(72) Inventeur: **Terreur, Frédéric, Rue Reine Astrid 21, B-4620 Fleron(BE)**

(74) Mandataire: **Lacasse, Lucien Emile et al, CENTRE DE RECHERCHES METALLURGIQUES Abbaye du Val-Benoît 11, rue Ernest Solvay, B-4000 Liège(BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un dispositif pour moduler un faisceau laser focalisé sur une surface en mouvement, qui conporte un organe rotatif pourvu d'une pluralité d'orifices de passage et tournant dans ledit faisceau de façon à laisser passer par intermittence au moins une partie dudit faisceau laser à travers lesdits orifices de passage et dans lequel les faces latérales radiales desdits orifices de passage sont inclinées par rapport à l'axe dudit faisceau laser, lesdites faces latérales radiales étant constituées d'un matériau réfléchissant au moins partiellement ledit faisceau laser (voir BE-A 894 042).

On connaît déjà, notamment par le brevet BE-A-870.609, un procédé de marquage de la surface d'un cylindre de laminage au moyen d'un faisceau laser intermittent. Le faisceau laser intermittent est constitué d'impulsions successives très rapprochées, qui frappent la surface du cylindre, celui-ci étant animé d'un mouvement de rotation autour de son axe. Chaque impulsion provoque la fusion d'une très petite zone de la surface, où il se forme ainsi un relief constitué d'une dépression, ou microcratère, entourée d'un bourrelet partiel ou complet. Du fait de la rotation du cylindre et d'un mouvement de translation du faisceau laser par rapport au cylindre, ce procédé connu permet de former des microcratères répartis de façon sensiblement uniforme à la surface du cylindre et conférant à cette dernière une rugosité contrôlée sensiblement isotrope et homogène.

Il a en outre été proposé, en particulier par le brevet BE-A-894.042, un procédé pour moduler un faisceau laser utilisé notamment pour le marquage de la surface d'un cylindre de laminoir. Selon ce procédé, on utilise pour rendre le faisceau laser intermittent, un organe rotatif ajouré tournant dans le faisceau de façon à successivement interrompre et laisser passer le faisceau. Le faisceau direct, c'est-à-dire le faisceau traversant l'organe ajouré et atteignant directement la surface du cylindre, frappe cette surface en une première zone située dans l'axe du faisceau. Par ailleurs, les orifices de passage du faisceau laser à travers l'organe ajouré sont dotés de faces latérales radiales réfléchissantes inclinées par rapport à l'axe du faisceau laser; on dévie ainsi au moins une partie du faisceau, pendant la phase d'interruption de ce dernier, vers une autre zone de la surface qui subit de la sorte un préchauffage ou un revenu, selon le sens de rotation de l'organe rotatif ajouré.

Toutefois, cette autre zone de la surface ne coïncide généralement pas avec la première zone précitée qui reçoit le faisceau direct. Il en résulte que ce préchauffage n'a que peu ou pas d'effet sur l'opération de marquage effectuée par le faisceau direct.

La présente invention a pour objet de proposer un dispositif pour moduler un faisceau laser du type qui vient d'être rappelé. Le dispositif de l'invention est conçu de telle façon que l'énergie du faisceau réfléchi soit utilisée de façon optimale pour contribuer à la formation de la rugosité désirée.

Conformément à la présente invention, un dispositif pour moduler un faisceau laser focalisé sur une surface en mouvement, qui comporte un organe rotatif pourvu d'une pluralité d'orifices de passage et tournant dans ledit faisceau de façon à laisser passer par intermittence au moins une partie dudit faisceau laser à travers lesdits orifices de passage et dans lequel les faces latérales radiales desdits orifices de passage sont inclinées par rapport à l'axe dudit faisceau laser, lesdites faces latérales radiales étant constituées d'un matériau réfléchissant au moins partiellement ledit faisceau laser, est caractérisé en ce que les angles d'inclinaison des faces latérales radiales opposées d'au moins un desdits orifices de passage sont différents l'un de l'autre et en ce que cette différence d'inclinaison est telle que le faisceau laser dévié par une desdites faces latérales radiales est ensuite renvoyé par la face latérale radiale opposée vers la zone de ladite surface qui est atteinte par le faisceau laser passant sand être dévié à travers ledit orifice de passage.

La différence d'inclinaison précitée dépend bien entendu d'un certain nombre de paramètres géométriques et cinématiques de l'installation de traitement. A cet égard, on peut notamment citer la distance focale de la lentille de focalisation du faisceau laser, la position de l'organe rotatif par rapport à la surface à traiter, le nombre d'orifices de passage, le rapport entre la largeur d'un orifice et la distance séparant deux orifices successifs, et la vitesse relative de l'organe rotatif par rapport à la surface à traiter.

Néanmoins, dans les conditions de travail généralement rencontrées, il est apparu que cette différence d'inclinaison était avantageusement comprise entre 15 degrés et 30 degrés, et de préférence encore entre 20 degrés et 25 degrés.

Par l'expression "faisceau focalisé sur la surface" utilisée dans la présente demande, il faut comprendre que le faisceau est focalisé aux abords immédiats de cette surface, et de préférence légèrement sous la surface de façon à former, sur cette surface, une zone d'impact ayant une étendue non nulle.

Dans le cadre de la présente invention, l'axe de rotation dudit organe rotatif peut être orienté de façon quelconque par rapport à l'axe dudit faisceau laser. De même, le faisceau laser peut présenter un angle d'incidence quelconque par rapport à sa zone d'impact sur la surface.

Il s'est cependant avéré avantageux que les deux axes précités soient parallèles l'un à l'autre, et que l'axe du faisceau laser soit perpendiculaire à la zone d'impact du faisceau sur la surface. En pratique, il est justifié de considérer ladite zone d'impact comme plane, en raison de sa très faible étendue par rapport à la surface d'un corps tel qu'un cylindre de laminoir.

Egalement selon l'invention, au moins une desdites faces latérales est revêtue d'un matériau favorisant la réflexion dudit faisceau laser.

D'autres particularités et avantages du dispositif de l'invention apparaîtront à la lecture de la description d'un exemple de réalisation donnée ci-dessous à titre de simple illustration. Cette description se réfère aux dessins annexés, dans lesquels la

figure 1 représente un disque pourvu d'une couronne d'orifices de passage; la

figure 2 illustre, en coupe circulaire suivant la ligne A-A de la figure 1, la configuration des orifices de passage conformément à la technique antérieure; et la

figure 3 illustre, en coupe circulaire suivant la ligne A-A de la figure 1, la configuration des orifices de passage conformément à la présente invention.

Ces figures constituent des représentations schématiques, dans lesquelles on n'a fait apparaître que les éléments directement nécessaires à une bonne compréhension de l'invention. Par ailleurs, des éléments identiques ou analogues sont désignés par les mêmes repères numériques dans toutes les figures.

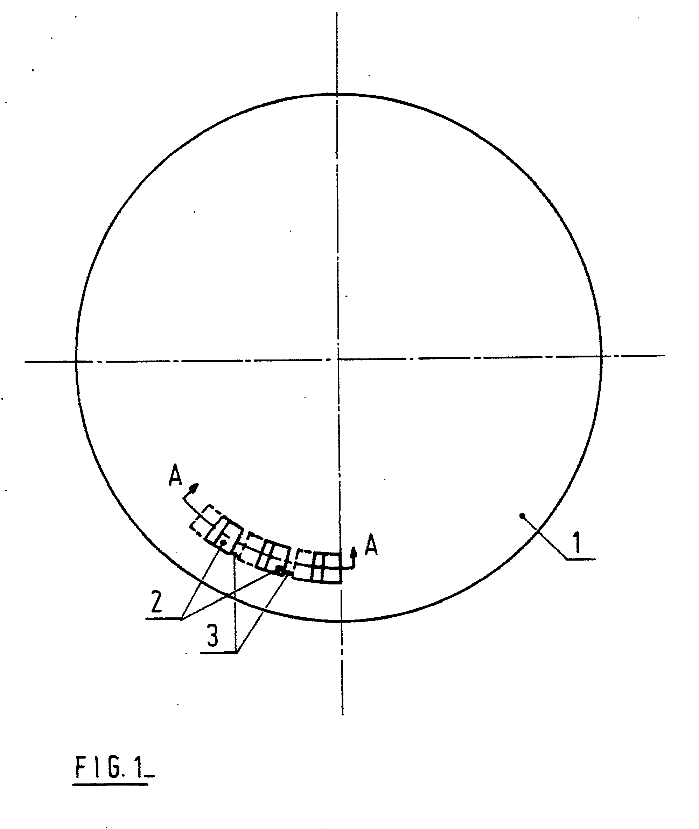

La figure 1 représente un organe rotatif ajouré, constitué par un disque 1 dans lequel sont ménagés des orifices de passage 2, séparés par des parties pleines ou dents 3. Ces orifices 2, dont une partie seulement est représentée, sont disposés suivant une couronne voisine du bord du disque 1; ils peuvent d'ailleurs, sans préjudice pour l'invention, être constitués par des créneaux taillés dans la périphérie du disque 1. Les orifices 2 présentent de préférence une section régulière comportant deux côtés opposés orientés radialement, auxquels correspondent deux faces opposées, dites faces latérales radiales, des orifices de passage.

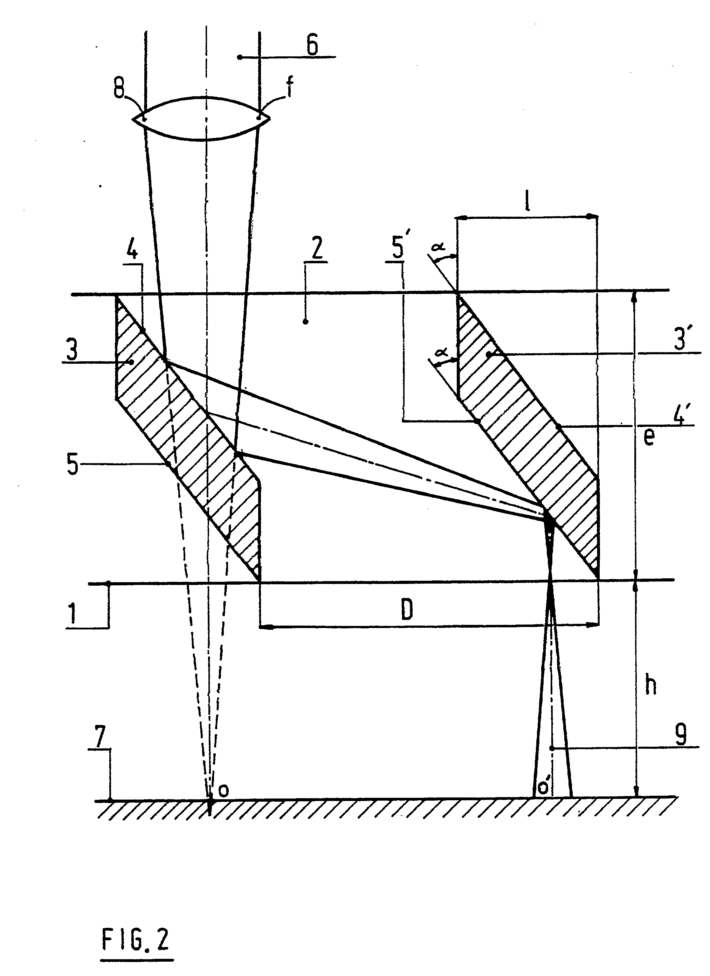

Dans la technique antérieure, rappelée dans la figure 2, un orifice de passage 2 est délimité par des faces latérales 4, 5' radiales parallèles entr'elles. Ces faces 4, 5' sont inclinées d'un angle $\alpha$ par rapport à la direction de l'axe 6 du faisceau laser incident, lequel est perpendiculaire au plan de la surface 7 du cylindre à traiter. Enfin, l'axe de rotation du disque 1 est parallèle à l'axe 6 du faisceau laser. En incidence directe, le faisceau laser est focalisé sur la surface 7 au moyen d'une lentille 8. Les faces parallèles 4, 5' assurent une double réflexion du faisceau laser et restituent un faisceau sortant dont l'axe 9 est parallèle à l'axe 6 du faisceau incident. La zone d'impact du faisceau est déplacée de 0 à 0', où il se produit un préchauffage. Lorsque la dent 3 cesse d'intercepter le faisceau d'axe 6, la zone d'impact revient en 0 en un temps insuffisant pour que la zone 0' ait pu arriver en 0. Ce retard est dû à l'énorme mais inévitable différence de vitesse entre le disque 1 et la surface 7; cette différence est telle que la surface 7 peut pratiquement être considérée comme immobile entre des interruptions du faisceau par deux dents successives telles que 3 et 3'. Par conséquent, le préchauffage effectué en 0' n'aura d'influence que lorsque la zone 0' sera parvenue en 0, c'est-à-dire après un temps tel que la zone 0' se sera déjà sensiblement refroidie. Ce temps sera d'ailleurs d'autant plus long que la différence de vitesse précitée est plus grande.

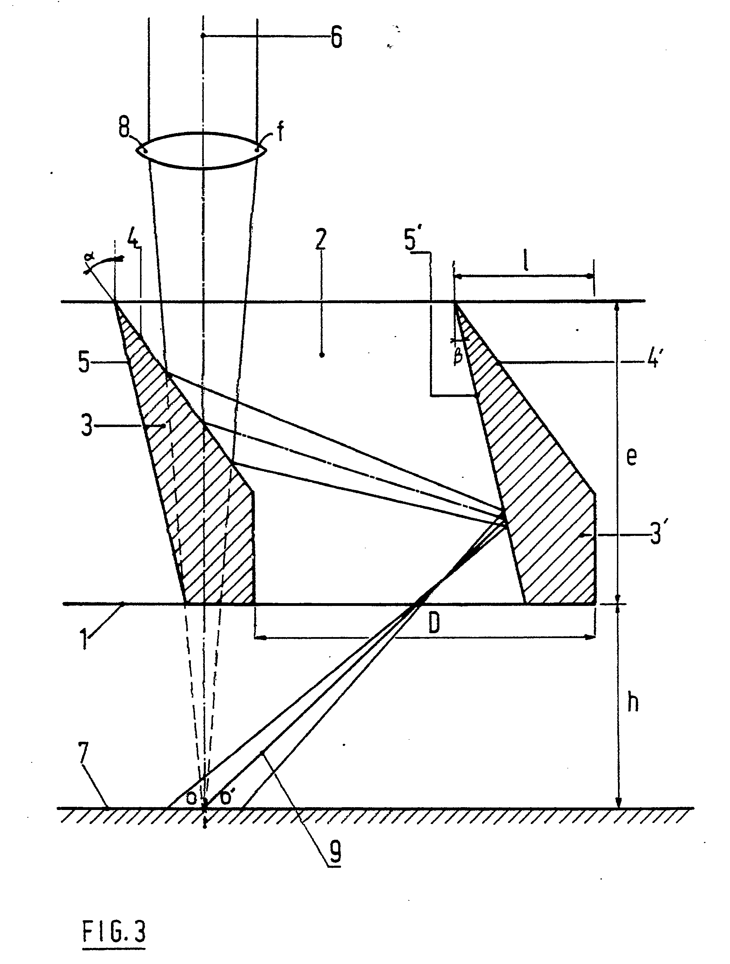

La situation est tout autre avec un disque 1 dont les dents 3, 3' présentent des faces 4, 5; 4', 5' inclinées l'une par rapport à l'autre, conformément à la présente invention. Un tel disque est représenté schématiquement dans la figure 3.

Ici, la face 4 est encore inclinée d'un angle $\alpha$ par rapport à l'axe 6 du faisceau laser et elle dévie dès lors ce faisceau vers la face 5', exactement comme dans la figure 2. Toutefois, la face 5' est ici inclinée d'un angle $\beta$ par rapport à l'axe 6 du faisceau incident, et cet angle $\beta$ est tel que la face 5' renvoie le faisceau laser 9 vers la zone de la surface 7 qu'atteindrait le faisceau incident si la dent 3 n'existait pas. En d'autres termes, la zone 0' d'impact du faisceau dévié 9 coïncide avec la zone 0 d'impact du faisceau direct 6. Toujours en raison de la différence de vitesse entre le disque 1 et la surface 7, la zone 0 ne s'est pratiquement pas déplacée pendant le temps requis pour que cesse l'interruption du faisceau 6 par la dent 3. Le faisceau dévié 9 assure donc un préchauffage effectif de la zone 0. Le déplacement de la zone 0 pendant ce temps est d'autant plus faible que la différence de vitesses précitée est grande. L'efficacité du préchauffage augmente donc avec la différence de vitesse entre le disque 1 et la surface 7 du cylindre à traiter.

Pour fixer les idées, on a opéré avec un dispositif présentant les caractéristiques géométriques suivantes, dont la signification est indiquée dans la figure 3.
$\alpha$ = 36 degrés
$\beta$ = 12 degrés 50'
soit ($\alpha$-$\beta$) = 23 degrés 10'
f = 127 mm (5")
l = 1,36 mm
e = 3 mm
h = 2 mm
D = 3,36 mm.

Pour différentes valeurs de la différence de vitesse entre le disque 1 et la surface 7, on a toujours obtenu une excellente coïncidence des zones d'impact 0 et 0' et un préchauffage très efficace des zones de formation des microcratères.

La description qui précède fait état, à titre d'exemple, du préchauffage de la zone de formation des microcratères. Il va de soi que l'inversion du sens de rotation du disque 1 permet, de façon aussi efficace, d'opérer un revenu de la zone traitée.

## Revendications

1. Dispositif pour moduler un faisceau laser (6) focalisé sur une surface (7) en mouvement, qui comporte un organe rotatif (1) pourvu d'une pluralité d'orifices de passage (2) et tournant dans ledit faisceau de façon à laisser passer par intermittence au moins une partie dudit faisceau laser à travers lesdits orifices de passage et dans lequel les faces latérales radiales (4, 5) desdits orifices de passage sont inclinées par rapport à l'axe dudit faisceau laser, lesdites faces latéales radicales (4, 5) étant constituées d'un matériau réfléchissant au moins partiellement ledit faisceau laser, caractérisé en ce que les angles d'inclinaison ( $\alpha$ , $\beta$ ) des faces latérales radiales opposées (4, 5') d'au moins un desdits orifices de passage (2) sont différents l'un de l'autre et en ce que cette différence d'inclinaison est telle que le faisceau laser (6) dévié par une desdites faces latérales radiales (4) est ensuite renvoyé par la face latérale radiale opposée (5') vers la zone de ladite surface (7) qui est atteinte par le faisceau laser (6) passant sans être dévié à travers ledit orifice de passage (2).

2. Dispositif suivant la revendication 1, caractérisée en ce que ladite différence d'inclinaison est comprise entre 15 degrés et 30 degrés.

3. Dispositif suivant la revendication 1, caractérisé en ce que ladite différence d'inclinaison est comprise entre 20 degrés et 25 degrés.

4. Dispositif suivant l'une ou l'autre des revendications 1 à 3, caractérisé en ce que l'axe dudit faisceau laser (6) est substantiellement perpendiculaire à la surface (7) à son point d'impact sur celle-ci.

5. Dispositif suivant l'une ou l'autre des revendications 1 à 4 caractérisé en ce que ledit organe rotatif est un disque et en ce que son axe de rotation est parallèle à l'axe du faisceau laser incident.

6. Utilisation du dispositif suivant l'une ou l'autre des revendications 1 â 5, pour le marquage de la surface d'un cylindre de laminage.

**Patentansprüche**

1. Vorrichtung zum Modulieren eines auf eine bewegliche Oberfläche (7) fokussierten Laserstrahls (6) mit einem mit einer Mehrzahl von Durchgangsöffnungen (2) versehenen und sich im besagten Laserstrahl drehenden Drehkörper (1) zum intermittierenden Durchlassen mindestens eines Teils des besagten Laserstrahls durch die besagten Durchgangsöffnungen, in welcher die radialen Seitenflächen (4, 5) der besagten Durchgangsöffnungen in bezug auf die Achse des besagten Laserstrahls geneigt sind, wobei die besagten radialen Seitenflächen (4, 5) aus einem den besagten Laserstrahl mindestens teilweise reflektierenden Material bestehen, dadurch gekennzeichnet, daß die Neigungswinkel (α, ß) der einander gegenüberliegenden radialen Seitenflächen (4, 5') mindestens einer der besagten Durchgangsöffnungen (2) von einander verschieden sind und daß dieser Neigungsunterschied so beschaffen ist, daß der von einer der besagten radialen Seitenflächen (4) abgelenkte Laserstrahl (6) danach von der gegenüberliegenden radialen Seitenfläche (5') zur Zone der besagten Oberfläche (7) zurückgesandt wird, die von dem Laserstrahl (6) erreicht wird, der die besagte Durchgangsöffnung (2) durchläuft, ohne abgelenkt zu werden.

2. Vorrichtung nach Anspruch 1, dadurch gekennzeichnet, daß der besagte Neigungsunterschied zwischen 15 Grad und 30 Grad beträgt.

3. Vorrichtung nach Anspruch 1, dadurch gekennzeichnet, daß der besagte Neigungsunterschied zwischen 20 Grad und 25 Grad beträgt.

4. Vorrichtung nach einem der Ansprüche 1 bis 3, dadurch gekennzeichnet, daß die Achse des besagten Laserstrahls (6) im wesentlichen senkrecht zur Oberfläche (7) an seiner Auftreffstelle auf diese ist.

5. Vorrichtung nach einem der Ansprüche 1 bis 4, dadurch gekennzeichnet, daß der besagte Drehkörper eine Scheibe ist und daß seine Drehachse parallel zur Achse des einfallenden Laserstrahls liegt.

6. Anwendung der Vorrichtung nach einem der Ansprüche 1 bis 5 zum Markieren der Oberfläche einer Walzwerkwalze.

**Claims**

1. A device for modulating a laser beam (6) focused on a moving surface (7), which comprises a rotating component (1) provided with a plurality of light-passing apertures (2) and rotating in the said beam in such a way as to allow at least a part of the said laser beam to pass intermittently through the said light-passing apertures and in which the radial lateral faces (4, 5) of the said light-passing apertures are inclined with respect to the axis of the said laser beam, the said radial lateral faces (4, 5) consisting of a material reflecting at least partially the said laser beam, characterized in that the angles of inclination (α, ß) of the opposite radial lateral faces (4, 5') of at least one of the said light-passing apertures (2) are different from each other and in that this difference in inclination is such that the laser beam (6) deflected by one of the said radial lateral faces (4) is then sent back by the opposite radial lateral face (5') towards the zone of the said surface (7) which is reached by the laser beam (6) passing through the said light-passing aperture (2) without being deflected.

2. The device according to Claim 1, characterized in that the said difference in inclination lies between 15 degrees and 30 degrees.

3. The device according to Claim 1, characterized in that the said difference in inclination lies between 20 degrees and 25 degrees.

4. The device according to any one of Claims 1 to 3, characterized in that the axis of the said laser beam (6) is substantially perpendicular to the surface (7) at its point of impact on the surface.

5. The device according to any one of Claims 1 to 4, characterized in that the said rotating component is a disc and in that its rotation axis is parallel to the axis of the incident laser beam.

6. Use of the device according to any one of Claims 1 to 5 for marking the surface of a rolling-mill roll.

EP 0 307 384 B1

F I G. 1

FIG. 2

FIG.3